# EUROPEAN PATENT APPLICATION

(11) **EP 4 759 661 A1**
(43) Date of publication of application: **17.06.2026**
(21) Application number: 25215423.2
(22) Date of filing: 13.11.2025
(51) Int. Cl.: B60W 60/00, B60W 50/14

(54) **VEHICLE AND METHOD FOR CONTROLLING THE SAME**

(30) Priority: 13.12.2024 KR 20240185770
(71) Applicant: Hyundai Motor Company, Seoul 06797 (KR); Kia Corporation, Seoul 06797 (KR)
(72) Inventor: LEE, Jin Ug, 18280 Hwaseong-si, Gyeonggi-do (KR); CHOI, Eun Young, 18280 Hwaseong-si, Gyeonggi-do (KR); PARK, Jong Sung, 18280 Hwaseong-si, Gyeonggi-do (KR); KIM, Jong Chul, 18280 Hwaseong-si, Gyeonggi-do (KR); PARK, Se Young, 18280 Hwaseong-si, Gyeonggi-do (KR)
(74) Representative: Isarpatent

(57) **Abstract**

A vehicle and a method for controlling the same are disclosed. A control device of a vehicle may include a processor and a memory storing at least one instruction. The at least one instruction may be configured, when executed by the processor, to cause the control device to: determine a current steering angle of the vehicle, and a target steering angle for an autonomous driving system of the vehicle; determine, based on whether a difference between the current steering angle and the target steering angle is less than or equal to a threshold value, whether to activate the autonomous driving system or to restrict activation of the autonomous driving system; and control, based on the determination of whether to activate or restrict activation of the autonomous driving system, an operation of the vehicle.

## Description

### TECHNICAL FIELD

The present disclosure relates to autonomous vehicles and more particularly to technology for regulating activation of an autonomous driving system.

### BACKGROUND

In an autonomous driving system, technology is utilized to control steering by activating some functions.

However, in at least some implementations of a steering control system, since steering control is executed simply according to a driver's function activation input, unintended steering movements may occur due to sudden activation of functions.

### SUMMARY

The present disclosure has been made to solve the aforementioned problems and is directed to controlling the activation of an autonomous driving system based on a difference between a current steering angle and a target steering angle of a vehicle in an autonomous driving system.

The problems to be solved by the present disclosure are not limited to the problems that are mentioned above, and other problems that have not been mentioned can be clearly understood by those skilled in the art from the description below.

According to one or more example embodiments of the present disclosure, a control device of a vehicle may include: a processor and a memory storing at least one instruction. The at least one instruction may be configured, when executed by the processor, to cause the control device to: determine a current steering angle of the vehicle, and a target steering angle for an autonomous driving system of the vehicle; determine, based on whether a difference between the current steering angle and the target steering angle is less than or equal to a threshold value, whether to activate the autonomous driving system or to restrict activation of the autonomous driving system; and control, based on the determination of whether to activate or restrict activation of the autonomous driving system, an operation of the vehicle.

The at least one instruction may be configured, when executed by the processor, to cause the control device to control the operation of the vehicle by: restricting activation of the autonomous driving system based on the difference between the current steering angle and the target steering angle exceeding the threshold value.

The at least one instruction may be configured, when executed by the processor, to cause the control device to control the operation of the vehicle by: activating the autonomous driving system based on the difference between the current steering angle and the target steering angle being less than or equal to the threshold value.

The at least one instruction may be configured, when executed by the processor, to cause the control device to determine the current steering angle and the target steering angle by: determining the current steering angle and the target steering angle based on receiving a user input for requesting activation of the autonomous driving system.

The at least one instruction may be configured, when executed by the processor, to further cause the control device to: determine, based on a speed of the vehicle, the threshold value.

The threshold value may be set to keep the vehicle from deviating from a lane of travel of the vehicle when steering control is performed on the vehicle according to the target steering angle.

The at least one instruction may be configured, when executed by the processor, to further cause the control device to: adjust the threshold value based on a user input.

The at least one instruction may be configured, when executed by the processor, to cause the control device to control the operation of the vehicle by: changing a steering angle of a steering wheel of the vehicle based on the difference between the current steering angle and the target steering angle.

The at least one instruction may be configured, when executed by the processor, to cause the control device to control the operation of the vehicle by: outputting, via an input and output interface of the vehicle and based on determining to activate the autonomous driving system, a first notification.

The at least one instruction may be configured, when executed by the processor, to cause the control device to control the operation of the vehicle by: outputting, via an input and output interface of the vehicle and based on determining to restrict activation of the autonomous driving system, a second notification.

According to one or more example embodiments of the present disclosure, a method performed by an apparatus of a vehicle may include: determining a current steering angle of the vehicle, and a target steering angle for an autonomous driving system of the vehicle; determining, based on whether a difference between the current steering angle and the target steering angle is less than or equal to a threshold value, whether to activate the autonomous driving system or to restrict activation of the autonomous driving system; and controlling, based on the determination of whether to activate or restrict activation of the autonomous driving system, an operation of the vehicle.

Controlling the operation of the vehicle may include at least one of: restricting activation of the autonomous driving system based on the difference between the current steering angle and the target steering angle exceeding the threshold value; or activating the autonomous driving system based on the difference between the current steering angle and the target steering angle being less than or equal to the threshold value.

Determining the current steering angle and the target steering angle may include: determining the current steering angle and the target steering angle based on receiving a user input for requesting activation of the autonomous driving system.

The method may further include: determining, based on a speed of the vehicle, the threshold value.

The threshold value may be set to keep the vehicle from deviating from a lane of travel of the vehicle when steering control is performed on the vehicle according to the target steering angle.

The method may further include: adjusting the threshold value based on a user input.

Controlling the operation of the vehicle may include: outputting, to a steering controller, a signal indicating the target steering angle; and, based on the signal, activating an autonomous driving operation of the autonomous driving system and controlling, by the autonomous driving system, a steering wheel of the vehicle according to the target steering angle for the autonomous driving operation by changing a steering angle of the steering wheel based on the difference between the current steering angle and the target steering angle.

Controlling the operation of the vehicle may include at least one of: outputting, via an input and output interface of the vehicle and based on determining to activate the autonomous driving system, a first notification; or outputting, via the input and output interface of the vehicle and based on determining to restrict activation of the autonomous driving system, a second notification.

According to one or more example embodiments of the present disclosure, a vehicle may include: a steering sensor; at least one sensor configured to detect a surrounding environment of the vehicle; a processor; and a memory storing at least one instruction. The at least one instruction may be configured, when executed by the processor, to cause the vehicle to: determine, using the steering sensor, a current steering angle of a steering wheel of the vehicle; determine, based on the detected surrounding environment, a target steering angle of the steering wheel for an autonomous driving system of the vehicle; determine, based on whether a difference between the current steering parameter and the target steering parameter is less than or equal to a threshold value, whether to activate the autonomous driving system or to restrict activation of the autonomous driving system; and control, based on the determination of whether to activate or restrict activation of the autonomous driving system, an operation of the vehicle.

The at least one instruction may be configured, when executed by the processor, to cause the vehicle to determine whether to activate the autonomous driving system or to restrict activation of the autonomous driving system further based on a direction of lane markings of a lane in which the vehicle is located and a longitudinal direction of the vehicle. The at least one instruction may be configured, when executed by the processor, to cause the vehicle to control the operation of the vehicle by: outputting, to a steering controller, a signal indicating the target steering angle; and, based on the signal, activating an autonomous driving operation of the autonomous driving system and controlling, by the autonomous driving system, the steering wheel according to the target steering angle for the autonomous driving operation.

### BRIEF DESCRIPTION OF THE DRAWINGS

The above and other objects, features, and advantages of the present disclosure will become more apparent to those of ordinary skill in the art by describing one or more example embodiments thereof in detail with reference to the accompanying drawings, in which:
FIG. 1 is a configuration diagram of an example vehicle;
FIG. 2 is a flowchart showing an example operation of determining whether to activate an autonomous driving function;
FIG. 3 is a flowchart showing an example operation for determining whether to activate the autonomous driving function; and
FIGS. 4 and 5 are illustrative diagrams showing an example operation of determining whether to activate the autonomous driving function.

### DETAILED DESCRIPTION

Hereinafter, one or more example embodiments of the present disclosure will be described in detail with reference to the accompanying drawings.

However, the technical idea of the present disclosure is not limited to the example embodiment(s) that will be described, but may be implemented in various different forms, and one or more of the components in the example embodiment(s) may be selectively combined or substituted and used without departing from the scope of the technical idea of the present disclosure.

Terms (including technical and scientific terms) used in the example embodiment(s) of the present disclosure may be construed as having meanings that can be generally understood by those skilled in the art to which the present disclosure belongs, unless explicitly and specifically defined and described, and meanings of terms that are commonly used, such as terms defined in a dictionary, may be construed in consideration of contextual meaning of the related art.

In addition, the terms used in the example embodiment(s) of the present disclosure are intended to describe the example embodiment(s) and are not intended to limit the present disclosure.

In the present specification, a singular form may include a plural form unless the context clearly indicates otherwise, and when "at least one (or one or more) of A, B, and C" is described, this may include one or more of all combinations of A, B, and C.

In addition, terms such as "first," "second," "A," "B," "(a)," and "(b)" may be used to describe components in the example embodiment(s) of the present disclosure.

These terms are only intended to distinguish the component from other components, and do not limit the nature, order, or sequence of the component.

When a component is described as being "connected," "coupled," or "joined" to another component, this may include not only a case where the component is directly connected, coupled, or joined to the other component, but also a case where the component is "connected," "coupled," or "joined" to the other component by still another component between the component and the other component.

If one component is described as being formed or disposed "on or under" another component, the term "on or under" includes not only a case in which two components are in direct contact with each other, but also a case in which one or more other components are formed or disposed between the two components. In addition, when the term "on or under" is expressed, this may mean not only an upward direction but also a downward direction with respect to one component.

In various flowcharts of the present disclosure, at least some steps may be omitted or the order of the steps may be changed, and at least some of the various example embodiment(s) of the present disclosure may be performed at a specific point in time in each step of the flowchart. The various flowcharts of the present disclosure may be performed by at least one of a control device 100, a processor 130, and a vehicle 10. Further, redundant contents in the drawings of the present disclosure may be omitted.

The term "~unit" used in the example embodiments means a software or hardware component such as a field-programmable gate array (FPGA) or an application-specific integrated circuit (ASIC), and the "~unit" performs a certain role. However, the "~unit" is not limited to software or hardware. The "~unit" may be configured to reside on an addressable storage medium or may be configured to operate one or more processors. Accordingly, for example, the "~unit" includes components such as software components, object-oriented software components, class components, and task components, processes, functions, attributes, procedures, subroutines, segments of program code, drivers, firmware, microcode, circuits, data, databases, data structures, tables, arrays, and variables. Functions provided in the components and "~units" may be combined into a smaller number of components and "~units" or may be further separated into additional components and "~units." Further, the components and "~units" may be implemented to operate one or more central processing units (CPUs) in a device or a secure multimedia card.

"Autonomous driving system" or "driver control assistance system" mentioned in the present disclosure refers to hardware and software that can help a driver continuously control the longitudinal and lateral movements of a vehicle. The driver control assistance system may be referred to as "system" in the present disclosure. In the present specification, the term 'autonomous driving system' may refer to the system as a whole, or it may be used to encompass a specific 'autonomous driving function' that is activated and controlled within the system.

"Autonomous driving function" mentioned in the present disclosure may refer to an individual unit of control operation performed by the autonomous driving system to control a specific behavior of the vehicle. For example, the autonomous driving function of the present disclosure may include a specific function that can be activated or deactivated by a user's request, such as a Lane Keeping Assist function or an automatic steering control function.

"Feature" mentioned in the present disclosure may mean a function of a specific system that helps a driver in a defined traffic scenario, situation, and system boundary.

"Dynamic control" mentioned in the present disclosure may mean performing operational and tactical functions required to move a vehicle in real time. This may include controlling the lateral and longitudinal movements of the vehicle, monitoring a road environment, coping with events in a road traffic environment, operation planning, signal transmission, and the like.

"System boundaries" mentioned in the present disclosure may mean verifiable or measurable limits or conditions set by a manufacturer, and conditions that affect a system designed to help a driver, or functions of the system and the ability of the system to operate as intended, or settings within the range of the conditions.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., monitoring and comparing a steering input by the driver) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., monitoring and comparing a steering input by the driver) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., monitoring and comparing a steering input by the driver) described herein.

Minimum risk maneuver (MRM) operation(s) may also be controlled, for example, based on one or more features (e.g., monitoring and comparing a steering input by the driver) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., monitoring and comparing a steering input by the driver) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may include an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

An autonomous driving level and/or autonomous driving activation/deactivation may also be controlled, for example, based on one or more features (e.g., monitoring and comparing a steering input by the driver) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as 5 seconds, 30 seconds, 1 minute, etc.). By changing the required user attentiveness, the driver may be required to look ahead more often (e.g., at least once in a threshold time period, such as 5 seconds, 30 seconds, 1 minute, etc.). By changing the autonomous driving level, one or more video contents may not be displayed on a display of the vehicle.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., monitoring and comparing a steering input by the driver) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, driver warning control, autonomous driving operational design domain (ODD), engaging and/or disengaging an autonomous driving mode, etc.). One or more auxiliary devices (e.g., engine brake, exhaust brake, hydraulic retarder, electric retarder, regenerative brake, etc.) may also be controlled, for example, based on one or more features (e.g., monitoring and comparing a steering input by the driver) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., evaluating the engagement state of the driver) described herein. An operation control of the vehicle may include, for example, activating or deactivating the autonomous driving system based on the steering input by the driver (e.g., preventing the autonomous driving system from engaging if the disparity between the current steering input by the driver and a target steering input as determined by autonomous driving system is above a threshold value) or gradually changing the steering angle of the vehicle based on the difference between a current steering angle and a target steering angle.

The vehicle that an autonomous driving system is actively controlling may be referred to as an ego vehicle, a host vehicle, or an autonomous vehicle. The ego vehicle may also be referred to as a self-driving car, an autonomous car (AC), a driverless car, a robotaxi, a robotic car, or a robo-car. The ego vehicle may be the vehicle that is equipped with the autonomous driving system. Alternatively, the autonomous driving system may control the ego vehicle, for example, from an external and/or remote device, such as a server. The ego vehicle can be partially or wholly controlled (e.g., piloted, driven, etc.) remotely by a remote human driver. A car that is ahead of the ego vehicle (e.g., in the same driving lane as the ego vehicle) may be referred to as a vehicle in front (e.g., a vehicle directly in front), a vehicle ahead (e.g., a vehicle directly ahead), a lead vehicle, a leading vehicle, or a preceding vehicle. A car that follows the ego vehicle (e.g., in the same driving lane as the ego vehicle) may be referred to as a car behind, a trailing vehicle, a following vehicle, or a succeeding vehicle. An adjacent vehicle may refer to any vehicle located in any direction (e.g., front, rear, left, right, diagonal, etc.) from the ego vehicle as long as no other vehicles (e.g., intervening vehicles) exist between it and the ego vehicle (e.g., regardless of the distance from the ego vehicle). Alternatively, in some contexts, only those vehicles that are located within a threshold distance (e.g., line of sight and/or detection limit of one or more sensors of the ego vehicle) from the ego vehicle may be referred to as adjacent vehicles. A target vehicle may be any vehicle that is near the ego vehicle (e.g., within a threshold distance away from the ego vehicle). The target vehicle may be any vehicle that the autonomous driving system monitors, recognizes, identifies, tracks, and/or analyzes, either actively or passively, either once or multiple times, and either sporadically or continuously. The threshold distance may be, for example, the line of sight and/or the detection limit of one or more sensors of the ego vehicle, but the threshold distance may be a value (e.g., an adjustable value) that is less than the line of sight and/or the detection limit of the one or more sensors of the ego vehicle. The target vehicle can be, for example, a vehicle in front, a vehicle behind, a vehicle in a different lane than the driving lane of the ego vehicle (e.g., a vehicle to the left, a vehicle to the right, a vehicle in a diagonal direction, etc.), and/or an adjacent vehicle (e.g., regardless of the distance from the ego vehicle and/or regardless of whether there are intervening vehicle(s) between the target vehicle and the ego vehicle). A target vehicle may also be referred to as a surrounding vehicle, a nearby vehicle, an external vehicle, another vehicle (other vehicles), and so forth.

Hereinafter, the example embodiment(s) will be described in detail with reference to the accompanying drawings, the same or corresponding components will be denoted by the same reference numbers throughout drawings, and redundant description thereof will be omitted.

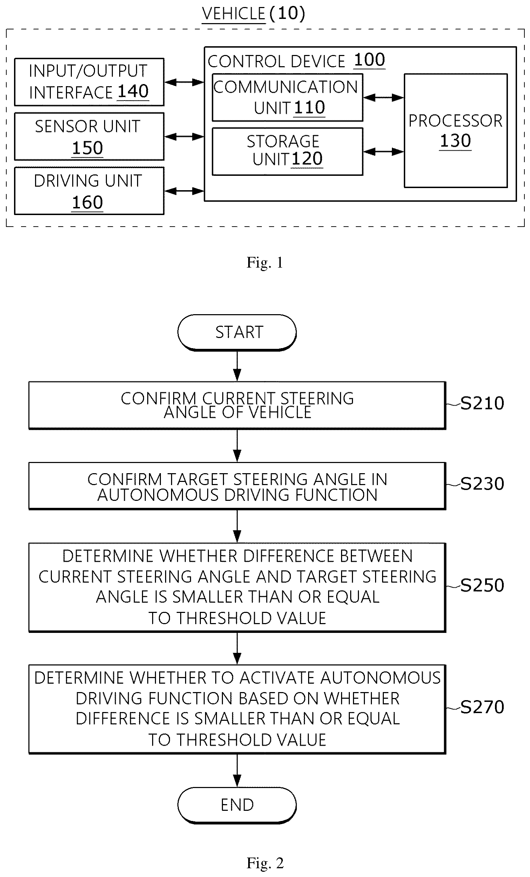

FIG. 1 is a configuration diagram of an example vehicle 10.

The vehicle 10 may include a control device 100, a communication unit 110, a storage unit 120, a processor 130, an input/output interface (also referred to as an input and output interface) 140, a sensor unit 150, and a driving unit 160. Each of these components in FIG. 1 may be implemented inside the vehicle.

The control device 100 may be formed integrally with internal components of the vehicle, and may be implemented as an independent device separately from the other components inside the vehicle 10 and may perform communication with the internal components of the vehicle through various connection means (e.g., a controller area network (CAN) bus, a wireless network, and a wired connection). The control device 100 may include the communication unit 110, the storage unit 120, and the processor 130 to control the vehicle, and may further include other components such as the input/output interface 140, the sensor unit 150, and the driving unit 160 to perform a complex control function depending on a driving situation.

The communication unit 110 may perform communication with other control devices inside the vehicle to share inter-system data or transmit or receive various types of information through a connection to the outside of the vehicle. The communication unit 110 may transmit control signals and data between the internal components using various in-vehicle communication schemes such as CAN communication and Ethernet, and may link driving information and external data in real time through communication with a user terminal, another vehicle (vehicle-to-vehicle (V2V)), infrastructure (vehicle-to-infrastructure (V2I)), or an external server.

The communication unit 110 may perform short-range communication, GPS signal reception, vehicle-to-everything (V2X) communication, optical communication, broadcast transmission and reception, and intelligent transport systems (ITS) communication functions, and may support stable data transmission in a short range using wireless communication technology such as Bluetooth, radio frequency identification (RFID), Infrared Data Association (IrDA), ultra wideband (UWB), ZigBee, near field communication (NFC), Wi-Fi, Wi-Fi Direct, and wireless USB. The communication unit 110 may include a mobile communication module based on a mobile communication network (LTE, 5G, and the like) and a wireless Internet module for access to wireless Internet to receive real-time data through long-range communication and improve the performance of the autonomous driving system by linking with a cloud.

The storage unit 120 may include various types of memories capable of storing data, and may be integrated into the control device 100 or the processor 130 or configured in the form of a separate module. The storage unit 120 may include a nonvolatile memory (e.g., a hard disk drive, a flash memory, an electrically erasable programmable read-only memory (EEPROM), an static random access memory (SRAM), an ferroelectric RAM (FRAM), a phase-change random access memory (PRAM), or a magnetoresistive random access memory (MRAM)) and a volatile memory (e.g., a dynamic random access memory (DRAM), a static random access memory (SDRAM), or a double data rate synchronous dynamic random access memory (DDR-SDRAM)), which may be combined to implement memory systems with various capacities and performances.

The storage unit 120 may be configured to store and manage various types of data related to steering control of the vehicle. Specifically, the storage unit 120 may store a safety parameter such as a threshold value for steering control, which may be utilized as a reference value for determining whether to activate a function. Data related to a current steering angle and a target steering angle, environmental information collected from an autonomous driving sensor, and the like may be stored in the storage unit 120.

The storage unit 120 may provide accumulated data as needed by storing previous data such as a steering angle change history or a function activation and deactivation history.

The storage unit 120 may store instructions that can cause execution of various example embodiment(s) of the present disclosure. When these instructions are executed by the processor 130, the instructions may operate to confirm the current steering angle of the vehicle 10 and the target steering angle in the autonomous driving function of the vehicle, and determine whether to activate the autonomous driving function depending on whether a difference between the current steering angle and the target steering angle is less than or equal to a threshold value.

The processor 130 may perform communication with the communication unit 110, the storage unit 120, the input/output interface 140, the sensor unit 150, the driving unit 160, and various internal components of the vehicle 10 through electrical or operational connections, and may control the operation of each component and perform data processing. The processor 130 is a central processing unit for command execution and data calculation, and may collect, process, and analyze data in real time to perform vehicle control according to a driving environment of the vehicle.

The processor 130 may be implemented in the form of hardware, software, or a combination thereof, and may perform vehicle control logic in the form of, for example, a microcontroller, an FPGA, or an ASIC. The processor 130 may include a multi-processor configuration for controlling complex autonomous driving and driver assistance systems. Such a processor configuration may support comprehensive control and stable performance of the vehicle by executing autonomous driving and assistance systems, processing sensor data, managing communication data, and performing driving-related determinations.

The input/output interface 140 may serve to receive inputs (e.g., user inputs) related to vehicle control from the user and transfer a vehicle control status and system operation information to the user.

The input/output interface 140 may perform a function of receiving various inputs from the user and transferring the vehicle control status to the user. The input/output interface 140 may include an input device and an output device.

The input device may include physical buttons, selection areas on a touch display, a voice recognition function, a gesture recognition function, and the like, which allow the user to input commands, for example, to request activation of the autonomous driving system, switch between functions, or set driving assistance.

The output device may include a display, an audio module (for example, a speaker), a haptic module, and the like, and may provide the user with a status of the autonomous driving system, a control switching request notification, whether or not the function is activated, and the like in a visual, auditory, or tactile form.

The input/output interface 140 may receive an input from the driver through a touch screen, physical buttons such as switches, a voice recognition system, or the like. This makes it possible for the driver to transmit, for example, commands to activate an autonomous driving function, to change a warning setting, and to release a warning to the vehicle system.

The sensor unit (also referred to as a sensor or a sensor array) 150 may include a plurality of sensors that detect various types of driving and environmental information in real time to support stable operation of an autonomous driving system or a driver assistance system. The sensor unit 150 may measure a distance to and speed of a nearby object through long-range detection sensors such as a radar and light detection and ranging (LiDAR), and may detect objects near the vehicle 10 by including an ultrasonic sensor.

The sensor unit 150 may include a camera. The camera can be classified into an external camera and an internal camera. The external camera may recognize a road and a surrounding environment, and the internal camera may detect a driver's state (e.g., eye tracking or a steering wheel grip state) or an interior situation to comprehensively ascertain situations inside and outside the vehicle. The sensor unit 150 may include a heart rate sensor, a pressure sensor, an infrared sensor, and the like to collect the driver's biometric information or various types of environmental data.

The sensor unit 150 may detect various types of data to support the steering control of the vehicle 10. Specifically, the sensor unit 150 may include a steering angle sensor for detecting a current steering angle state of the vehicle in real time, and the autonomous driving sensor that can detect the steering angle required for a scheduled autonomous driving function.

The steering angle sensor may measure steering angle data of the vehicle 10 and provide the current steering angle state in real time, and the autonomous driving sensor may detect environmental data such as information about lanes around the vehicle, a road structure, locations of a preceding vehicle and a following vehicle, and the presence or absence of obstacles to collect target steering angle information required at the time of activation of the autonomous driving function.

The sensor unit 150 may transmit detected current steering angle data and target steering angle data to the processor 130.

The driving unit 160 may include various components that provide driving power required for driving the vehicle 10 and control the operation of the vehicle according to a command output from the control device 100. The driving unit 160 may include devices that generate and transfer power for the vehicle, such as an engine, a motor, a transmission, and a wheel drive system, and a controller that controls the devices, and acceleration, deceleration, and direction changes of the vehicle 10 may be performed through such components. The driving unit 160 may be, for example, a power train of the vehicle.

The driving unit 160 is controlled to maintain driving safety by performing longitudinal control (e.g., acceleration and deceleration) and lateral control (e.g., lane maintenance and changes) of the vehicle. For example, the driving unit 160 receives a command from the control device 100 and adjusts an output of the motor or a rotational speed and direction of wheels so that the vehicle can travel along a driving route.

The driving unit 160 may include a brake system to reduce a speed of the vehicle or stop the vehicle during driving. The driving unit 160 may control the vehicle 10 based on control through an electric motor in the case of an electric vehicle or based on an engine output in the case of an internal combustion engine vehicle.

FIG. 2 is a flowchart showing an example operation of determining whether to activate an autonomous driving function. In particular, the flowchart shows example operations related to the generation and control of a virtual object.

The control device 100 may confirm the current steering angle of the vehicle (S210).

For example, the control device 100 may ascertain a steering state of the vehicle 10 through the sensor unit 150. For example, the steering angle sensor of the sensor unit 150 may measure a rotation angle of the steering wheel or steering system of the vehicle 10 and transmit a current steering state to the processor 130.

The control device 100 may confirm the target steering angle in the autonomous driving function (S230).

The control device 100 may determine (e.g., calculate) the target steering angle based on data collected from the autonomous driving sensor mounted on the vehicle, or may set the target steering angle by utilizing data provided from an external system.

Specifically, the autonomous driving sensor may detect lane information of a road ahead, a location and movement direction of a nearby vehicle, road curvature, or the presence or absence of obstacles and transmit such data to the control device 100. The control device 100 may determine (e.g., calculate) the target steering angle at which the vehicle 10 can drive safely, based on the data.

For example, if the vehicle is driving on a straight road, the target steering angle may be set to a value similar to the current steering angle, and if the vehicle is driving on a curved road or a lane change is required, the target steering angle may be dynamically adjusted according to a curvature of the road or a lane location.

The control device 100 may determine whether the difference between the current steering angle and the target steering angle is less than or equal to the threshold value (S250).

For example, the control device 100 may determine (e.g., calculate) a difference between the current steering angle confirmed through the sensor unit 150 and a target steering angle determined (e.g., calculated) based on autonomous driving sensor data, and determine whether or not a calculated value exceeds a preset threshold value.

The threshold value may be a preset reference value and may be set to prevent driving instability due to sudden steering or excessive steering changes. This threshold value may be preset by the user or the like using a lookup table, or may be dynamically determined (e.g., calculated) by the processor 130 based on data. For example, if the vehicle drives on a curved road, the threshold value may be set differently in real time according to a road curvature and a driving speed of the vehicle.

The control device 100 may set the threshold value in consideration of the driving speed of the vehicle 10. For example, the control device 100 may determine (e.g., calculate) an appropriate threshold value for maintaining steering stability based on driving speed data collected from the sensor unit 150.

Specifically, since a sudden steering change is likely to decrease the stability of the vehicle 10 during high-speed driving (e.g., 80 km/h or more), the control device 100 may set a small threshold value (e.g., 10 degrees) to minimize the steering change. On the other hand, since the likelihood of a decrease in stability due to a sudden steering change is relatively low during low-speed driving (e.g., 40 km/h or less), the control device 100 may set a more relaxed threshold value (e.g., 20 degrees) to secure the flexibility of the autonomous driving function.

The control device 100 may set the threshold value so that the vehicle 10 does not deviate from a lane in which the vehicle 10 is driving (e.g., a lane of travel of the vehicle 10) when steering control is performed according to the target steering angle.

For example, the control device 100 may determine (e.g., calculate) a maximum steering angle range in which the vehicle 10 can maintain the lane based on lane information collected from the sensor unit 150 and current location data of the vehicle 10. For example, the control device 100 may determine (e.g., calculate) a condition under which the vehicle can stay within the lane when the steering control is performed based on a current lane width of the vehicle 10, a current location of the vehicle 10, and a road curvature.

The control device 100 may dynamically adjust the threshold value according to a signal input from the user. For example, the control device 100 may receive steering sensitivity or a driving mode set by the user through the input/output interface 140 of the vehicle and adjust the threshold value based on the steering sensitivity or the driving mode.

For example, if the user selects a "steering sensitivity" setting on the display or touch panel of the vehicle and designates one of "high," "medium," and "low," the control device 100 may apply a threshold value appropriate for each setting.

The control device 100 may determine whether to activate (e.g., turn on, cede control to, etc.) the autonomous driving function based on whether the difference between the current steering angle and the target steering angle is less than or equal to the threshold value (S270).

For example, if the difference between the current steering angle and the target steering angle is less than or equal to the preset threshold value, the control device 100 may determine that the steering condition is stable and activate the autonomous driving function.

On the other hand, if the difference between the current steering angle and the target steering angle exceeds the preset threshold value, the control device 100 can restrict the activation of the autonomous driving function or delay the activation until an additional condition is satisfied to prevent driving instability that may occur due to sudden steering.

The control device 100 may gradually change the steering angle of the vehicle 10 based on the difference between the current steering angle and the target steering angle of the vehicle 10.

Specifically, the control device 100 may determine (e.g., calculate) the difference between the current steering angle and the target steering angle and then activate the autonomous driving function through a predetermined step even if the difference exceeds a certain threshold value. For example, the steering may be changed (e.g., gradually changed) by setting an intermediate steering angle value instead of adjusting the steering angle to the target steering angle at one time in order to prevent a sudden steering change.

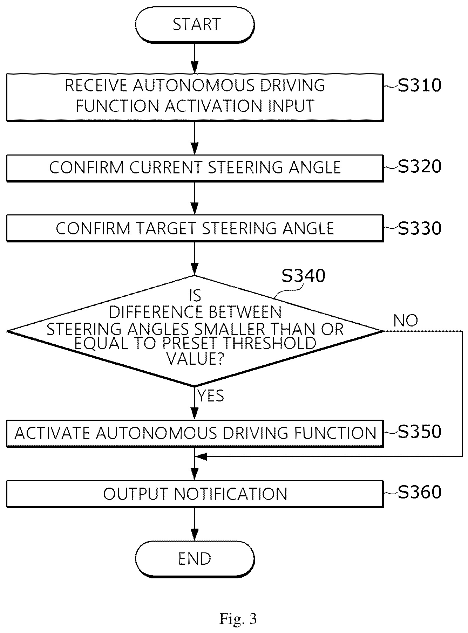

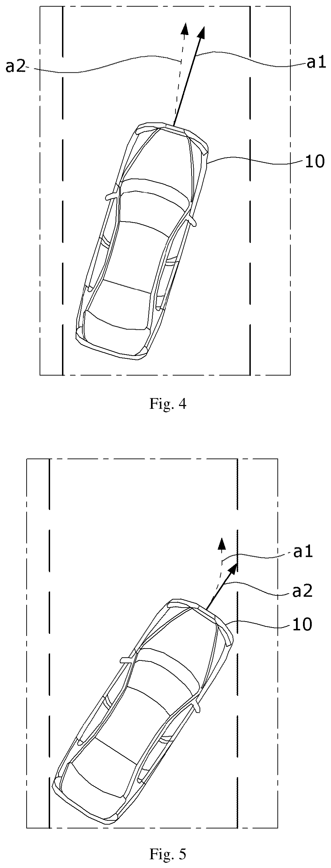

FIG. 3 is a flowchart showing an example operation for determining whether to activate the autonomous driving function. For the description of FIG. 3, reference will be made to FIGS. 4 and 5. FIGS. 4 and 5 are illustrative diagrams showing an example operation of determining whether to activate the autonomous driving function.

The control device 100 may receive an autonomous driving function activation input (S310).

For example, the control device 100 may receive an input signal for activating the autonomous driving function through an input device such as a button, a touch screen, or a voice command. The input signal may be received through the input/output interface 140 installed in the vehicle 10.

If an input for requesting the activation of the autonomous driving function of the vehicle 10 as in S310 is received, the control device 100 may determine whether to activate the autonomous driving function by confirming the current steering angle and the target steering angle.

For example, if the driving mode of the vehicle 10 is switched from a standby mode to an active mode, the control device 100 may determine whether to activate the autonomous driving function as in FIGS. 2 and 3. The standby mode may mean a state in which the vehicle 10 is in a driving preparation state but at least part of the autonomous driving function is deactivated, and the active mode may mean a state in which the autonomous driving function and main control functions of the vehicle are activated.

The control device 100 may confirm the current steering angle and the target steering angle (S320 and S330), and determine whether the difference between the current steering angle and the target steering angle is less than or equal to the preset threshold value (S340).

If the difference between the current steering angle and the target steering angle is less than or equal to the preset threshold value (S340: Yes), the control device 100 may activate the autonomous driving function to control the driving of the vehicle 10 so that the vehicle 10 reaches the target steering angle (S350).

For example, referring to FIG. 4, the current steering angle of the vehicle 10 is an angle corresponding to an a1 direction, and if the autonomous driving function is activated, a target steering angle determined (e.g., calculated) in a current section is an angle corresponding to an a2 direction. Since a difference in angle between the a2 direction and the a1 direction (e.g., 15 degrees) is less than or equal to a threshold value (e.g., 20 degrees), the control device 100 may activate the autonomous driving function.

If the autonomous driving function is activated, the control device 100 may output a notification (e.g., a first notification) (S360). For example, the control device 100 may display a message "The autonomous driving function is activated" on a display panel of the vehicle, or provide a visual notification (e.g., icon lighting) on the dashboard.

On the other hand, if the difference between the current steering angle and the target steering angle exceeds a preset threshold (S340: No), the control device 100 may restrict the autonomous driving function and output a related notification (S360).

For example, referring to FIG. 5, the current steering angle of the vehicle 10 is an angle corresponding to the a1 direction, and a steering angle set as a target if the autonomous driving system is activated is an angle corresponding to the a2 direction. Since a difference in angle (e.g., 30 degrees) between the a1 direction and the a2 direction exceeds the threshold value (e.g., 20 degrees), the control device 100 may not activate the autonomous driving function.

The control device 100 may notify that the difference between the current steering angle and the target steering angle exceeds the threshold value through a warning sound or voice notification (e.g., a second notification) and induce additional measures.

For example, the control device 100 may display a message indicating that "The autonomous driving function activation condition is not satisfied." on a display of the vehicle 10 or may light a warning icon to provide visual feedback to the driver. The control device 100 may output a guidance message such as "Please adjust the steering wheel toward the lane" through the display. The second notification may be a stronger notification than the first notification. For example, an output intensity of an audio signal of the second notification may be higher than that of an audio signal of the first notification. For example, the first notification may be displayed only as a visual notification, and the second notification may further include at least one of an auditory notification (e.g., audio output) and a tactile notification (e.g., vibration output in a haptic module), in addition to the visual notification.

According to the present disclosure, there is a provided a control device including a memory, and a processor electrically or adaptively connected to the memory, wherein the processor is configured to confirm a current steering angle of a vehicle and a target steering angle in an autonomous driving system of the vehicle, and determine whether to activate the autonomous driving system depending on whether a difference between the current steering angle and the target steering angle is smaller than or equal to a threshold value.

In the control device according to some aspects, the processor may be configured to restrict activation of the autonomous driving system when the difference between the current steering angle and the target steering angle exceeds the threshold value.

In the control device according to some aspects, the processor may be configured to activate the autonomous driving system when the difference between the current steering angle and the target steering angle is smaller than or equal to the threshold value.

In the control device according to some aspects, the processor may be configured to determine whether to activate the autonomous driving system of the vehicle by confirming the current steering angle and the target steering angle when an input for requesting activation of the autonomous driving system is received.

In the control device according to some aspects, the threshold value may be determined in consideration of a driving speed of the vehicle.

In the control device according to some aspects, the threshold value may be set so that the vehicle does not deviate from a lane in which the vehicle is driving when steering control is performed according to the target steering angle.

In the control device according to some aspects, the processor may be configured to dynamically adjust the threshold value according to a signal input from a user.

In the control device according to some aspects, the processor may be configured to gradually change a steering angle of the vehicle according to the difference between the current steering angle and the target steering angle of the vehicle.

In the control device according to some aspects, the processor may be configured to output a first notification through an input/output interface of the vehicle when the autonomous driving system is activated.

In the control device according to some aspects, the processor may be configured to output a second notification through an input/output interface of the vehicle when the activation of the autonomous driving system is restricted.

According to the present disclosure, there is a provided a method for controlling a vehicle, including confirming a current steering angle of the vehicle, confirming a target steering angle in an autonomous driving system of the vehicle, and determining whether to activate the autonomous driving system depending on whether a difference between the current steering angle and the target steering angle is smaller than or equal to a threshold value.

The method according to some aspects may further include restricting activation of the autonomous driving system when the difference between the current steering angle and the target steering angle exceeds the threshold value.

The method according to some aspects may further include activating the autonomous driving system when the difference between the current steering angle and the target steering angle is smaller than or equal to the threshold value.

The method according to some aspects may further include determining whether to activate the autonomous driving system of the vehicle by confirming the current steering angle and the target steering angle when an input for requesting activation of the autonomous driving system is received.

In the method according to some aspects, the threshold value may be determined in consideration of a driving speed of the vehicle.

In the method according to some aspects, the threshold value may be set so that the vehicle does not deviate from a lane in which the vehicle is driving when steering control is performed according to the target steering angle.

The method according to some aspects may further include dynamically adjusting the threshold value according to a signal input from a user.

The method according to some aspects may further include gradually changing a steering angle of the vehicle according to the difference between the current steering angle and the target steering angle of the vehicle.

The method according to some aspects may further include outputting a first notification through an input/output interface of the vehicle the autonomous driving system is activated.

The method according to some aspects may further include outputting a second notification through an input/output interface of the vehicle when the activation of the autonomous driving system is restricted.

Through the example embodiment(s) of FIGS. 1 to 5 described above, it may be possible to prevent the unstable behavior of the vehicle due to rapid steering and minimize the driver's discomfort.

According to the present disclosure, it may be possible to prevent the unstable behavior of the vehicle due to rapid steering by determining whether to activate the autonomous driving function based on the difference between the current steering angle and the target steering angle of the vehicle.

The effects of the present disclosure are not limited to the effect mentioned above, and other effects that have not been mentioned can be clearly understood by those skilled in the art from the description below.

Although the present disclosure has been described above with reference to example embodiment(s) of the present disclosure, it will be understood by those skilled in the art that various modifications and changes can be made to the present disclosure without departing from the spirit and scope of the present disclosure set forth in the following claims.

## Claims

1. A control device of a vehicle, the control device comprising:
a processor; and
a memory storing at least one instruction that is configured, when executed by the processor, to cause the control device to:
determine:
a current steering angle of the vehicle, and
a target steering angle for an autonomous driving system of the vehicle;
determine, based on whether a difference between the current steering angle and the target steering angle is less than or equal to a threshold value, whether to activate the autonomous driving system or to restrict activation of the autonomous driving system; and
control, based on the determination of whether to activate or restrict activation of the autonomous driving system, an operation of the vehicle.

2. The control device of claim 1, wherein the at least one instruction is configured, when executed by the processor, to cause the control device to control the operation of the vehicle by:
restricting activation of the autonomous driving system based on the difference between the current steering angle and the target steering angle exceeding the threshold value.

3. The control device of claim **1,** wherein the at least one instruction is configured, when executed by the processor, to cause the control device to control the operation of the vehicle by:
activating the autonomous driving system based on the difference between the current steering angle and the target steering angle being less than or equal to the threshold value.

4. The control device of claim 1, wherein the at least one instruction is configured, when executed by the processor, to cause the control device to determine the current steering angle and the target steering angle by:
determining the current steering angle and the target steering angle based on receiving a user input for requesting activation of the autonomous driving system.

5. The control device of claim **1,** wherein the at least one instruction is configured, when executed by the processor, to further cause the control device to:
determine, based on a speed of the vehicle, the threshold value.

6. The control device of claim **1,** wherein the threshold value is set to keep the vehicle from deviating from a lane of travel of the vehicle when steering control is performed on the vehicle according to the target steering angle.

7. The control device of claim **1,** wherein the at least one instruction is configured, when executed by the processor, to further cause the control device to:
adjust the threshold value based on a user input.

8. The control device of claim **1,** wherein the at least one instruction is configured, when executed by the processor, to cause the control device to control the operation of the vehicle by:
changing a steering angle of a steering wheel of the vehicle based on the difference between the current steering angle and the target steering angle.

9. The control device of claim **1,** wherein the at least one instruction is configured, when executed by the processor, to cause the control device to control the operation of the vehicle by:
outputting, via an input and output interface of the vehicle and based on determining to activate the autonomous driving system, a first notification.

10. The control device of claim 1, wherein the at least one instruction is configured, when executed by the processor, to cause the control device to control the operation of the vehicle by:
outputting, via an input and output interface of the vehicle and based on determining to restrict activation of the autonomous driving system, a second notification.

11. A method performed by an apparatus of a vehicle, the method comprising:
determining:
a current steering angle of the vehicle, and
a target steering angle for an autonomous driving system of the vehicle;
determining, based on whether a difference between the current steering angle and the target steering angle is less than or equal to a threshold value, whether to activate the autonomous driving system or to restrict activation of the autonomous driving system; and
controlling, based on the determination of whether to activate or restrict activation of the autonomous driving system, an operation of the vehicle.

12. The method of claim 11, wherein the controlling of the operation of the vehicle comprises at least one of:
restricting activation of the autonomous driving system based on the difference between the current steering angle and the target steering angle exceeding the threshold value; or
activating the autonomous driving system based on the difference between the current steering angle and the target steering angle being less than or equal to the threshold value.

13. The method of claim 11, wherein the determining of the current steering angle and the target steering angle comprises:
determining the current steering angle and the target steering angle based on receiving a user input for requesting activation of the autonomous driving system.

14. The method of claim 11, further comprising:
determining, based on a speed of the vehicle, the threshold value.

15. A vehicle comprising:
a steering sensor;
at least one sensor configured to detect a surrounding environment of the vehicle;
a processor; and
a memory storing at least one instruction that is configured, when executed by the processor, to cause the vehicle to:
determine, using the steering sensor, a current steering angle of a steering wheel of the vehicle;
determine, based on the detected surrounding environment, a target steering angle of the steering wheel for an autonomous driving system of the vehicle;
determine, based on whether a difference between the current steering parameter and the target steering parameter is less than or equal to a threshold value, whether to activate the autonomous driving system or to restrict activation of the autonomous driving system; and
control, based on the determination of whether to activate or restrict activation of the autonomous driving system, an operation of the vehicle.
